# EUROPEAN PATENT SPECIFICATION

(11) **EP 2 625 067 B1**
(45) Date of publication and mention of the grant of the patent: **15.11.2017**
(21) Application number: 11831000.2
(22) Date of filing: 30.09.2011
(51) Int. Cl.: B60R 7/04, B60R 7/08

(54) **ROOF SHELF FOR VEHICLE CAB**
DACHREGAL FÜR EINE FAHRZEUGKABINE
TABLETTE DE TOIT POUR CABINE DE VÉHICULE

(30) Priority: 08.10.2010 SE 1051054
(43) Date of publication of application: 14.08.2013
(73) Proprietor: Scania CV AB, 151 87 Södertälje (SE)
(72) Inventor: KNÄLMANN, Johan, SE-165 74 Hässelby (SE); SÖDER, Kenneth, SE-151 39 Södertälje (SE); KARLSSON, Olov, SE-152 52 Södertälje (SE); LINDQUIST, Krister, SE-147 33 Tumba (SE); MAGNUSSON, Rickard, SE-146 40 Tullinge (SE); THORSÈN, Gunnar, SE-151 72 Södertälje (SE)
(74) Representative: Scania CV AB
(86) International application number: PCT/SE2011/051171
(87) International publication number: WO 2012/047155

(56) References cited:
- WO-A1-95/18727
- WO-A1-95/18727
- CH-A- 372 335
- DE-A1- 2 952 193
- DE-A1- 3 721 377
- DE-A1- 3 729 050
- DE-C1- 3 742 618
- DE-U1- 7 702 742
- JP-U- S5 550 811
- US-A- 1 459 111
- US-A- 1 946 374
- US-A- 2 818 317
- US-A- 2 908 433

## Description

### TECHNICAL FIELD

The present invention relates to a roof shelf for a vehicle cab.

### BACKGROUND

Cabs in trucks usually have a roof shelf situated above the windscreen to accommodate storage compartments and sundry equipment, e.g. a microwave oven.

Conventional roof shelves for cabs consist largely of self-supporting plastic parts, some of them fastened to the cab shell to support the roof shelf. The disadvantage of a loadbearing structure made of plastic is that its shape changes over time, particularly at high temperatures. Moreover, such a structure has a limited bearing capacity. Conventional plastic roof shelves comprise many parts joined together, resulting in long tolerance chains, time-consuming assembly work and high costs in cases which involve modifications to adapt the roof shelf to a new cab or alter its design.

Other conventional roof shelves comprise not only plastic parts but also a loadbearing sheetmetal structure. This involves the use of sheetmetal pressed to shape to provide the shelf with increased bearing capacity, but the plastic parts are intended to carry some of the load. Such pressed sheetmetal elements are relatively bulky, fragile and difficult to handle during fitting. They are also suited to particular roof shelves, making modifications expensive. A further problem is that the shape of loadbearing plastic parts changes over time.

US1946374 describes a roof shelf according to the preamble of claim 1. The object of that invention is to construct a simple and effective parcel rack or carrier for vehicles, which will automatically collapse or close when not in use, and can be readily opened or extended to receive and grip one or more parcels.

US2818317 describes a hanging desk or table to be used in a motor vehicle to facilitate writing, eating and storage of small articles.

### SUMMARY OF THE INVENTION

The object of the invention is to propose a roof shelf for a vehicle cab as defined in claim 1 wherein it is of high bearing capacity and of durable shape irrespective of load and temperature. The shelf should comprise few loadbearing parts, be easy to manufacture and fit and be flexible with regard to modifications.

The objects are achieved by a roof shelf with a frame structure which comprises a rod element configuration and which is adapted to being fastened to shell components of the cab. The roof shelf has also at least one panel element adapted to being supported by the frame structure.

The frame structure results in very good loadbearing capacity and can be firmly fitted in the cab's shell components. The rod element configuration means that the frame structure can provide good support for a number of panel elements and can also firmly support other components of the roof shelf. The panel elements need not carry any load and their visual appearance may be designed independently of the frame structure. The frame structure may be arranged within the roof shelf so as not to be visible from outside the shelf. The frame structure may also take the form of a single loadbearing item. The rod element configuration comprises here a number of rod elements put together.

The rod element configuration of the frame structure is with advantage made mainly of metal, resulting in high bearing capacity and durable shape independent of load and temperature. It is for example conceivable that seal elements or vibration damping elements which may form part of the rod element configuration might be made of plastic, composite or rubber material. The rod element configuration may nevertheless be made entirely of metal.

The rod element configuration of the frame structure may mainly comprise tubular elements, making it easy for panels and other components of the roof shelf to be fastened to the rod element configuration while at the same time achieving good bearing capacity and cost effectiveness.

The frame structure may be configured to carry the load resulting from the roof shelf and its contents. A small part of the load may be carried by panel elements and other components of the shelf if they are in contact with the cab. According to the invention, the frame structure nevertheless supports the shelf in the cab. The frame structure preferably carries the whole load due to the roof shelf and its contents.

In a simple version, the frame structure comprises an upper transverse rod element, a lower transverse rod element and at least one linking rod element. The latter extends from the lower transverse rod element to the upper transverse rod element. The rod elements afford the possibility of firm and easy fastening in the cab shell, while at the same time they may support not only panels, e.g. in the form of covers, but also other components of the roof shelf. The rod elements may also carry other equipment in the cab.

The lower transverse rod element may with advantage be arranged to be fastened to the cab's lateral shell components. Said element may be situated in the lower region of the roof shelf. This fastening and positioning make it possible for the lower transverse rod element to firmly and safely support the underside of the roof shelf. The lateral shell components may be respective right and left windscreen members.

The linking rod element may be arranged to be fastened to the cab's upper shell component. This fastening makes it possible for the linking rod element to provide firm support for the roof shelf surfaces which face towards the cab interior. The upper shell component may be a roof member.

Providing the frame structure with an upper transverse rod element, a lower transverse rod element and at least one linking rod element which are fastened to lateral shell components and to an upper shell component as described above results in a very firm and strong roof shelf well anchored in the cab.

The roof shelf according to the invention comprises two or more linking rod elements. The frame structure may then resemble a lattice or a horizontal ladder. The result is a firm and relatively lightweight structure. The linking rod elements may define between them various compartments in the roof shelf which are provided with good support by the various rod elements.

The upper transverse rod element may be situated in the upper region of the roof shelf, adjacent to a mainly vertical surface of the shelf so that this surface is provided with support by the upper transverse rod element. The surface may take the form of panels fastened to the rod elements.

The lower transverse rod element may be situated in, and thereby support, the lower region of the shelf. Such an arrangement is of advantage in that the load from the shelf contents acts largely upon the lower region of the shelf, which is consequently where support from the lower transverse rod element is needed. Particularly good support is provided if the lower transverse rod element is situated substantially in the middle of this region in the cab's longitudinal direction.

The roof shelf may comprise a sun visor supported by the lower transverse rod element. The rod element provides the sun visor with firm support. The outer cross-section of the lower transverse rod element may for example be circular and serve as a hinge pin for the sun visor.

According to the invention the roof shelf comprises a panel element which is a vertical cover supported by the upper transverse rod element. The cover provides firm support for the rod element and may at the same time serve as a pivot in the form of a hinge pin in a hinge which connects the cover to the frame structure. To this end, the shelf may further comprise a brake, e.g. in the form of a gas spring, which extends between the cover and the linking rod element.

The object of the invention may also be achieved by a vehicle cab comprising a roof shelf as above, and by a vehicle comprising such a cab.

### DESCRIPTION OF DRAWINGS

The invention is described below in more detail on the basis of embodiment examples with reference to the attached drawings, in which
Figure 1 depicts parts of the forward upper portion of a vehicle cab, with a partly complete roof shelf according to the invention and
Figure 2 depicts the frame structure of the roof shelf according to the invention.

### DESCRIPTION OF EMBODIMENTS

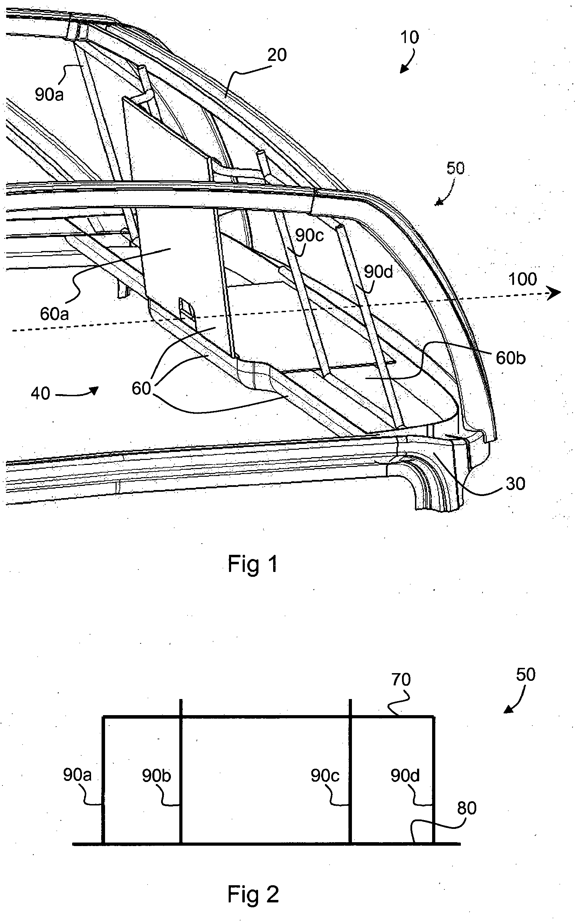

Figure 1 is a cutaway perspective view of a truck cab 10. The cab 10 has a shell composed of members welded together. Depicted uppermost is a roof member 20 extending across the cab 10, i.e. perpendicular to the cab's travel direction 100. The roof member 20 extends between two substantially horizontal upper longitudinal members. Running parallel with these members are two lower longitudinal members, the undersides of which in the section illustrated define the upper portion of a door aperture. The forward portion of this door aperture in the travel direction 100 is bounded by a substantially vertical windscreen member 30.

Figure 1 also illustrates a roof shelf 40 situated in the forward upper portion of the cab 10, above the undepicted windscreen. The roof shelf 40 comprises a frame structure 50 and a number of panels 60. The frame structure 50 is fastened to the cab's members 20, 30. As clearly depicted, the frame structure 50 extends across the cab and through the roof shelf 40. The panels 60 are fastened to the frame structure 50, and when the roof shelf 40 is complete they cover its whole outer surface. In other words, the panels 60 constitute the outer surface of the roof shelf 40, i.e. the surface which faces in towards the cab 10. The panels 60 thus conceal the frame structure 50.

Figure 2 depicts the frame structure 50 in plan view. The frame structure 50 is made up of a number of rods, e.g. in the form of tubes. In the example depicted, the frame structure 50 comprises an upper horizontal tube 70, a lower horizontal tube 80 and four vertical tubes 90a, 90b, 90c, 90d. Horizontal and vertical mean here the directions of the respective tubes when the frame structure is fitted in the cab as in Figure 1. The result here is that the four vertical tubes 90a-d do not actually run vertically but slope somewhat rearwards so that they are nearly parallel with the forward outer portion of the cab. The upper horizontal tube 70 is situated further rearwards in the cab's travel direction 100 than the lower horizontal tube 80. For the sake of simplicity, the tubes 90a-d which run between the upper horizontal tube 70 and the lower horizontal tubes 80 are referred to below as the vertical tubes 90a-d.

The two middle tubes 90b, 90c are longer than the outer tubes 90a, 90d so that the two middle tubes 90b, 90c protrude somewhat above the upper horizontal tube 70. The lower horizontal tube 80 is longer than the upper horizontal tube 70 and consequently protrudes to the left and right of the respective outer vertical tubes 90a, 90d.

The lower horizontal tube 80 is fastened to the two windscreen members 30. Alternatively, it may be fastened to the two lower longitudinal members situated above the door apertures. The tube 80 may also be fastened where these members meet, at the forward upper corners of the door apertures. Its two ends may comprise fastening plates (not depicted) which may be screwed or bolted in the cab's members 30.

The two middle vertical tubes 90b, 90c are fastened to the roof member 20. Their upper ends may be fastened by some kind of snap fastener, e.g. a hook, or by screws or bolts. Accordingly, the upper ends of the tubes 90b, 90c may comprise some kind of fastening device (not depicted), e.g. a hook or perforated plate screwed firmly in the roof member 20. The two middle vertical tubes 90b, 90c may transmit tensile forces from the roof shelf 40 to the roof member 20. In other versions, only one or only the outer 90a, 90d or all of the vertical tubes 90a-d may be fastened to the roof member 20.

In short, it may be stated that the tube ends whose function is to fasten the frame structure 50 in the cab 10 protrude somewhat outside the frame structure 50 upwards and at the respective sides, see Figure 2.

As indicated in Figure 1, the respective vertical tubes 90a-90d form a number of mutually adjacent compartments, here three in number. A number of panels are fastened as described above to the tubes 70, 80, 90a-d of the frame structure 50 so that a complete roof shelf 40 is formed. Panels may also be fastened to the vertical tubes 90a-d and extend into the shelf 40, i.e. forwards in the cab's travel direction 100, so that the compartments are separated from one another.

The compartments may be open to the interior of the cab 10 in the horizontal direction 100. One or more compartments may also be closable by substantially vertical covers. Figure 1 depicts such a cover 60a. The cover 60a is fastened at the top to the upper horizontal tube 70. In Figure 1 the upper horizontal tube 70 is provided with two double curves so that a middle portion of it intrudes somewhat into the cab 10, thereby providing the middle compartment with greater depth. A hinge formed by the cover 60a and the upper horizontal tube 70 enables the cover 60a to be pivoted about the tube.

The hinge is not depicted in detail but may take the form of elastic C-shaped fasteners on the cover 60a which snap firmly round the tube 70. The tube thus serves as a hinge pin. A gas spring (not depicted) may be fastened between the inside of the cover 60a and one of the vertical tubes 90b, 90c adjacent to the cover 60a.

The compartment undersides 60b, which are substantially horizontal, are closed by panels. The contents of the shelf 40 rest on these panels. The panels will however be subject to only limited loading, since the lower horizontal tube 80 of the frame structure 50 extends at the midpoint of the compartment undersides 60b, as depicted in Figure 1. A compartment may also accommodate relatively heavy equipment, e.g. a microwave oven, which will then rest on the lower horizontal tube 80. Said tube 80 may also be used for suspension of equipment, e.g. a visual display screen below the shelf 40.

As previously described, the frame structure 50 supports the shelf 40. The loads due to the weight of the shelf 40 and objects stored in it are transmitted to the members 20, 30 of the cab 10 via the frame structure. The frame structure is made of metal, e.g. steel or aluminium, and can therefore firmly support the shelf 40. The panels 60 may be made of plastic or some other suitable lightweight material, e.g. wood.

Fitting the shelf 40 may be achieved by the whole shelf being assembled outside the cab 10 and then lifted into it by means of a lifting device. The lifting device may be fastened to the upper protruding ends of the middle vertical tubes 90b, 90c. Alternatively, the frame structure 50 may be fitted as a first step, followed by the various panels 60 being fastened to the frame structure 50 when it is in position in the cab 10.

## Claims

1. A roof shelf (40) adapted to being fitted in a vehicle cab (10), which cab comprises upper shell components (20) and lateral shell components (30), wherein said shelf (40) is composed of a frame structure (50) formed by a rod element configuration (70, 80, 90a-d) and arranged to be fastened to the shell components (20, 30) of the cab (10), and of at least one panel element (60) arranged to be supported by the frame structure (50), such that the frame structure comprises
an upper transverse rod element (70),
a lower transverse rod element (80), and
at least one linking rod element (90a, 90b, 90c, 90d) arranged to extend from the lower transverse rod element (80) to the upper transverse rod element (70),
and further the lower transverse rod element (80) is arranged to be fastened to the lateral shell components (30), and the linking rod element (90b, 90c) is arranged to be fastened to the upper shell component (20), **characterised in that** said shelf (40) comprising a panel element (60) in the form of a substantially vertical cover (60a) supported by the upper transverse rod element (70) such that the rod element (70) is arranged to serve as a hinge pin.

2. A roof shelf (40) according to claim 1, such that the rod element configuration (70, 80, 90a-d) of the frame structure (50) is made mainly of metal.

3. A roof shelf (40) according to claim 1 or 2, such that the rod element configuration (70, 80, 90a-d) of the frame structure (50) mainly comprises tubular elements.

4. A roof shelf (40) according to any above claim, such that the frame structure (50) is configured to carry the load due to the roof shelf (40) and its contents.

5. A roof shelf (40) according to any above claim, comprising two or more linking rod elements (90a, 90b, 90c, 90d) arranged to define between them various compartments in the roof shelf (40).

6. A roof shelf (40) according to any above claim, such that the upper transverse rod element (70) is situated in the upper region of the roof shelf (40), adjacent to a substantially vertical surface (60a) of the shelf.

7. A roof shelf (40) according to any above claim, such that the lower transverse rod element (80) is situated in the lower region (60b) of the roof shelf (40), substantially at the middle of that region (60b) in the cab's travel direction (100).

8. A roof shelf (40) according to any above claim, further comprising a sun visor supported by the lower transverse rod element (80).

9. A roof shelf (40) according to any of the above claims, comprising a braking element extending between the cover and the linking rod element (90a, 90b, 90c, 90d).

10. A vehicle cab (10) comprising a roof shelf (40) according to any above claim.

11. A vehicle comprising a cab (10) according to claim 10.

## Patentansprüche

1. Dachablage (40), vorgesehen zum Einbau in eine Fahrzeugkabine (10), die obere Karosserieelemente (20) und seitliche Karosserieelemente (30) aufweist, wobei die Dachablage (40) zusammengesetzt ist aus einer Rahmenstruktur (50), die von einer Stabelementanordnung (70, 80, 90a-d) gebildet und dazu eingerichtet ist, an den Karosserieelementen (20, 30) der Fahrzeugkabine (10) befestigt zu werden, und aus zumindest einem Flächenelement (60), das dazu eingerichtet ist, von der Rahmenstruktur (50) gestützt zu werden, wobei die Rahmenstruktur umfasst
ein oberes querlaufendes Stabelement (70),
ein unteres querlaufendes Stabelement (80), und
zumindest ein verbindendes Stabelement (90a, 90b, 90c, 90d), das dazu eingerichtet ist, sich von dem unteren querlaufenden Stabelement (80) zu dem oberen querlaufenden Stabelement (70) zu erstrecken,
wobei ferner das untere querlaufende Stabelement (80) dazu eingerichtet ist, an dem seitlichen Karosserieelement (30) befestigt zu werden, und wobei das verbindende Stabelement (90b, 90c) dazu eingerichtet ist, an dem unteren Karosserieelement (20) befestigt zu werden, **dadurch gekennzeichnet, dass** die Dachablage (40) ein Flächenelement (60) in Gestalt einer im Wesentlichen vertikalen Abdeckung (60a) aufweist, die von dem unteren querlaufenden Stabelement (70) gestützt ist, sodass das Stabelement (70) dazu eingerichtet ist, als ein Scharnierbolzen zu dienen.

2. Dachablage (40) nach Anspruch 1, derart ausgebildet, dass die Stabelementanordnung (70, 80, 90a-d) der Rahmenstruktur (50) im Wesentlichen aus Metall gefertigt ist.

3. Dachablage (40) nach Anspruch 1 oder 2, derart ausgebildet, dass die Stabelementanordnung (70, 80, 90a-d) der Rahmenstruktur (50) im Wesentlichen rohrförmige Elemente aufweist.

4. Dachablage (40) nach einem der vorhergehenden Ansprüche, derart ausgebildet, dass die Rahmenstruktur (50) dazu konfiguriert ist, die Last aufgrund der Dachablage (40) und ihres Inhalts zu tragen.

5. Dachablage (40) nach einem der vorhergehenden Ansprüche, aufweisend zwei oder mehr verbindende Stabelement (90a, 90b, 90c, 90d), die dazu eingerichtet sind, zwischen ihnen mehrere Ablagefächer in der Dachablage (40) zu definieren.

6. Dachablage (40) nach einem der vorhergehenden Ansprüche, derart ausgebildet, dass das obere querlaufende Stabelement (70) in dem oberen Bereich der Dachablage (40) neben einer im Wesentlichen vertikalen Oberfläche (60a) der Dachablage angeordnet ist.

7. Dachablage (40) nach einem der vorhergehenden Ansprüche, derart ausgebildet, dass das untere querlaufenden Stabelement (80) in einem unteren Bereich (60b) der Dachablage (40) im Wesentlichen in der Mitte dieses Bereichs (60b) in Fahrtrichtung (100) der Fahrzeugkabine angeordnet ist.

8. Dachablage (40) nach einem der vorhergehenden Ansprüche, ferner umfassend eine Sonnenblende, die von dem unteren querlaufenden Stabelement (80) gestützt ist.

9. Dachablage (40) nach einem der vorhergehenden Ansprüche, umfassend ein Bremselement, das sich zwischen der Abdeckung und dem verbindenden Stabelement (90a, 90b, 90c, 90d) erstreckt.

10. Fahrzeugkabine (10), umfassend eine Dachablage (40) nach einem der vorhergehenden Ansprüche.

11. Fahrzeug, umfassend eine Fahrzeugkabine (10) nach Anspruch 10.

## Revendications

1. Etagère de pavillon (40) adaptée à être agencée dans une cabine de véhicule (10), cette cabine comprenant des composants d'enceinte supérieurs (20) et des composants d'enceinte latéraux (30), ladite étagère (40) étant constituée par une structure de cadre (50) formée par une configuration à éléments de tige (70, 80, 90a à d) et agencée de façon à être fixée aux composants d'enceinte (20, 30) de la cabine (10), et par au moins un élément de panneau (60) agencé de façon à être supporté par la structure de cadre (50), de telle sorte que la structure de cadre comprenne
un élément de tige transversal supérieur (70),
un élément de tige transversal inférieur (80), et
au moins un élément de tige de liaison (90a, 90b, 90c, 90d) agencé de façon à s'étendre de l'élément de tige transversal inférieur (80) à l'élément de tige transversal supérieur (70),
et, de plus, l'élément de tige transversal inférieur (80) étant agencé de façon à être fixé aux composants d'enceinte latéraux (30), et l'élément de tige de liaison (90b, 90c) étant agencé de façon à être fixé au composant d'enceinte supérieur (20), **caractérisée en ce que** ladite étagère (40) comprend un élément de panneau (60) sous la forme d'un capot sensiblement vertical (60a) supporté par l'élément de tige transversal supérieur (70) de telle sorte que l'élément de tige (70) soit agencé de façon à servir de broche de charnière.

2. Etagère de pavillon (40) selon la revendication 1, telle que la configuration à éléments de tige (70, 80, 90a à d) de la structure de cadre (50) soit principalement réalisée en métal.

3. Etagère de pavillon (40) selon la revendication 1 ou 2, telle que la configuration à éléments de tige (70, 80, 90a à d) de la structure de cadre (50) comprenne principalement des éléments tubulaires.

4. Etagère de pavillon (40) selon l'une quelconque des revendications ci-dessus, telle que la structure de cadre (50) soit configurée de façon à porter la charge due à l'étagère de pavillon (40) et à son contenu.

5. Etagère de pavillon (40) selon l'une quelconque des revendications ci-dessus, comprenant deux ou plusieurs éléments de tige de liaison (90a, 90b, 90c, 90d) agencés de façon à définir entre ceux-ci différents compartiments dans l'étagère de pavillon (40).

6. Etagère de pavillon (40) selon l'une quelconque des revendications ci-dessus, telle que l'élément de tige transversal supérieur (70) soit situé dans la région supérieure de l'étagère de pavillon (40), au voisinage d'une surface sensiblement verticale (60a) de l'étagère.

7. Etagère de pavillon (40) selon l'une quelconque des revendications ci-dessus, telle que l'élément de tige transversal inférieur (80) soit situé dans la région inférieure (60b) de l'étagère de pavillon (40), sensiblement au milieu de cette région (60b) dans la direction de déplacement (100) de la cabine.

8. Etagère de pavillon (40) selon l'une quelconque des revendications ci-dessus, comprenant de plus un pare-soleil supporté par l'élément de tige transversale inférieure (80).

9. Etagère de pavillon (40) selon l'une quelconque des revendications ci-dessus, comprenant un élément de freinage s'étendant entre le capot et l'élément de tige de liaison (90a, 90b, 90c, 90d).

10. Cabine de véhicule (10) comprenant une étagère de pavillon (40) selon l'une quelconque des revendications ci-dessus.

11. Véhicule comprenant une cabine (10) selon la revendication 10.
